# EUROPEAN PATENT APPLICATION

(11) **EP 4 746 562 A1**
(43) Date of publication of application: **20.05.2026**
(21) Application number: 24842128.1
(22) Date of filing: 17.06.2024
(51) Int. Cl.: H04W 72/25, H04W 72/02

(54) **RESOURCE DETERMINATION METHOD AND APPARATUS FOR SIDELINK OPERATION ON UNLICENSED SPECTRUM, AND DEVICE**

(30) Priority: 14.07.2023 CN 202310869750
(71) Applicant: CICT Connected and Intelligent Technologies Co., Ltd., Chongqing 400041 (CN)
(72) Inventor: WANG, Yakun, Chongqing 400041 (CN); ZHAO, Rui, Chongqing 400041 (CN); WEN, Xiaoran, Chongqing 400041 (CN); ZHENG, Shilei, Chongqing 400041 (CN)
(74) Representative: Murgitroyd & Company
(86) International application number: PCT/CN2024/099550
(87) International publication number: WO 2025/016129

(57) **Abstract**

The present application discloses a resource determination method and apparatus for sidelink operation on unlicensed spectrum, and a device. The method comprises: a first terminal device acquiring initial information; on the basis of the initial information, determining a candidate resource set; and performing resource exclusion on the candidate resource set to obtain an available resource set.

## Description

### CROSS-REFERENCE TO RELATED APPLICATIONS

The present application claims priority to Chinese Patent Application No. 202310869750.1, filed in China on July 14, 2023, which is incorporated herein by reference in its entirety.

### TECHNICAL FIELD

The present application relates to the field of communications technologies, and in particular, to a resource determination method and apparatus for sidelink (Sidelink, also referred to as side link) operation on unlicensed spectrum, and a device.

### BACKGROUND

A sidelink is one of communication manners used between terminal devices. When a terminal device needs to communicate with another terminal device by using a sidelink, the terminal device needs to first select a sidelink transmission resource, and then use the selected sidelink transmission resource to implement sidelink-based communication with the another terminal device. Currently, a sidelink resource selection mechanism is generally for a licensed spectrum.

However, the 3rd generation partnership project (3rd Generation Partnership Project, 3GPP) introduces sidelink operation on unlicensed spectrum (Sidelink Operation on Unlicensed Spectrum, SL-U). Compared with sidelink communication on a licensed spectrum, a terminal device that operates on an unlicensed spectrum can use any available spectrum without authorization. However, considering a new feature of SL-U, the sidelink resource selection mechanism that is applicable to a dedicated spectrum such as a licensed spectrum cannot be directly used.

Based on this, to implement SL-U-based communication, ensure transmission efficiency, and improve transmission reliability, a resource determination solution applicable to SL-U is urgently needed.

### SUMMARY

The present application provides a resource determination method and apparatus for sidelink operation on unlicensed spectrum, and a device. A feature of SL-U is fully considered in a sidelink resource determination mechanism, thereby preparing for selection of a proper SL-U resource, and performing effective communication by using SL-U.

According to a first aspect, the present application provides a resource determination method for sidelink operation on unlicensed spectrum, applied to a first terminal device, where the method includes:
acquiring initial information;
determining a candidate resource set based on the initial information; and
performing resource exclusion on the candidate resource set to obtain an available resource set.

Optionally, the method may further include:
selecting a target resource from the available resource set.

Optionally, the initial information includes at least one of the following information:
an available resource block set (Resource Block set, RB set);
an unavailable RB set;
an RB set with consistent listen before talk (Listen Before Talk, LBT) failures;
time information corresponding to an RB set with consistent LBT failures;
a quantity of RB sets occupied by transmission of a physical sidelink control channel (Physical Sidelink Control Channel, PSCCH) and/or a physical sidelink shared channel (Physical Sidelink Shared Channel, PSSCH) in one time unit;
an RB set occupied by transmission of a PSCCH and/or a PSSCH in one time unit;
a quantity of sub-channels occupied by transmission of a PSCCH and/or a PSSCH in one time unit;
a quantity of sub-channels occupied by transmission of a PSCCH and/or a PSSCH in one RB set in one time unit; or
a starting physical resource block (Physical Resource Block, PRB) of a resource pool.

Optionally, the available RB set meets at least one of the following conditions:
the available RB set is an RB set continuous in frequency domain;
the available RB set does not include an RB set with consistent LBT failures; or
a quantity of RB sets in any combination of consecutive RB sets in the available RB set is greater than or equal to a quantity of RB sets occupied by transmission of a PSSCH and/or a PSCCH.

Optionally, the RB set occupied by the transmission of the PSCCH and/or the PSSCH in the one time unit meets at least one of the following conditions:
the RB set occupied by the transmission of the PSCCH and/or the PSSCH in the one time unit is an RB set continuous in frequency domain; or
the RB set occupied by the transmission of the PSCCH and/or the PSSCH in the one time unit does not include an RB set with consistent LBT failures.

Optionally, a resource in the candidate resource set meets at least one of the following conditions:
being within one time unit in time domain; or
including a first quantity of RB sets in frequency domain, and occupying a second quantity of sub-channels in each RB set.

Optionally, the first quantity and/or the second quantity meet at least one of the following conditions:
a product of the first quantity and the second quantity is equal to a quantity of sub-channels occupied by transmission of a PSCCH or a PSSCH;
the second quantity of sub-channels are consecutive sub-channels;
indexes of the second quantity of sub-channels occupied in different RB sets in the first quantity of RB sets are the same;
the first quantity of RB sets are consecutive RB sets;
the first quantity of RB sets do not include any unavailable RB set in the initial information;
the first quantity of RB sets do not include any RB set with consistent LBT failures in the initial information;
the first quantity is equal to a quantity of RB sets occupied by transmission of a PSCCH and/or a PSSCH in one time unit in the initial information; or
the first quantity of RB sets are RB sets occupied by transmission of a PSCCH and/or a PSSCH in one time unit in the initial information.

Optionally, the determining the candidate resource set based on the initial information includes:
determining the candidate resource set based on at least one of the initial information, a target time, or a target frequency domain, where a resource in the candidate resource set belongs to the target time in time domain and belongs to the target frequency domain in frequency domain.

Optionally, the target frequency domain meets at least one of the following conditions:
the target frequency domain is an RB set occupied by transmission of a PSCCH and/or a PSSCH in one time unit in the initial information;
the target frequency domain is a third quantity of consecutive RB sets in a resource pool, where the third quantity is greater than or equal to a quantity of RB sets occupied by transmission of a PSCCH and/or a PSSCH; or
the target frequency domain is all RB sets of a target type in a resource pool, where the RB sets of the target type include a fourth quantity of consecutive RB sets, and the fourth quantity is greater than or equal to a quantity of RB sets occupied by transmission of a PSCCH and/or a PSSCH.

Optionally, a resource in the target frequency domain does not include an RB set in at least one of the following cases:
an RB set with consistent LBT failures in the initial information;
a fifth quantity of consecutive RB sets, where the fifth quantity is less than a quantity of RB sets occupied by transmission of a PSCCH and/or a PSSCH; or
an independent RB set, where the independent RB set does not constitute consecutive RB sets with any other RB set in the resource pool.

Optionally, the performing resource exclusion on the candidate resource set to obtain the available resource set includes:
excluding a candidate resource of a target type from the candidate resource set, to obtain the available resource set, where the candidate resource of the target type is associated with a target RB set.

Optionally, the target RB set meets at least one of the following conditions:
the target RB set is an RB set with consistent LBT failures in the initial information;
the target RB set is an unavailable RB set in the initial information;
the target RB set is a sixth quantity of consecutive RB sets, where the sixth quantity is less than a quantity of RB sets occupied by transmission of a PSCCH and/or a PSSCH; or
the target RB set is an independent RB set, where the independent RB set does not constitute consecutive RB sets with any other RB set in the resource pool.

Optionally, a ratio of a quantity of resources in the available resource set to a quantity of resources in a first resource set is greater than or equal to a first threshold, and the first resource set includes any one of the following:
the first resource set includes all candidate resources in a resource selection window; or
the first resource set includes all candidate resources in a resource selection window other than a candidate resource of a target type.

Optionally, the method further includes:
obtaining a channel busy ratio (Channel Busy Ratio, CBR), where the CBR is a ratio of a quantity of sub-channels whose received signal strength indicators (Received Signal Strength Indicator, RSSI) exceed a second threshold to a quantity of all sub-channels in a target measurement window.

Optionally, a definition of the RSSI includes any one of the following:
the RSSI is a linear average value of all received power values on orthogonal frequency division multiplexing OFDM symbols that are configured for a PSCCH and a PSSCH in one slot other than a starting symbol; or
the RSSI is a maximum value of at least two values of a first value, a second value, and a third value, where the first value is a linear average value of received power values on all symbols between a first starting symbol and a second starting symbol in OFDM symbols configured for a PSCCH and a PSSCH in one slot; the second value is a linear average value of received power values on all symbols after the second starting symbol in the OFDM symbols configured for the PSCCH and the PSSCH in the one slot; and the third value is a linear average value of received power values on all symbols except the first starting symbol and the second starting symbol in the OFDM symbols configured for the PSCCH and the PSSCH in the one slot.

Optionally, a frequency domain range of the target measurement window is at least one of the following:
a frequency domain range of a resource pool;
an RB set except an unavailable RB set in the initial information in a resource pool; or
an RB set except an RB set with consistent LBT failures in the initial information in a resource pool.

According to a second aspect, the present application further provides a resource determination apparatus for sidelink operation on unlicensed spectrum, applied to a first terminal device, where the apparatus includes:
an acquiring unit, configured to acquire initial information;
a determining unit, configured to determine a candidate resource set based on the initial information; and
an obtaining unit, configured to perform resource exclusion on the candidate resource set to obtain an available resource set.

Optionally, the apparatus further includes:
a selecting unit, configured to select a target resource from the available resource set.

Optionally, the initial information includes at least one of the following information:
an available RB set;
an unavailable RB set;
an RB set with consistent LBT failures;
time information corresponding to an RB set with consistent LBT failures;
a quantity of RB sets occupied by transmission of a PSCCH and/or a PSSCH in one time unit;
an RB set occupied by transmission of a PSCCH and/or a PSSCH in one time unit;
a quantity of sub-channels occupied by transmission of a PSCCH and/or a PSSCH in one time unit;
a quantity of sub-channels occupied by transmission of a PSCCH and/or a PSSCH in one RB set in one time unit; or
a starting PRB of a resource pool.

Optionally, the available RB set meets at least one of the following conditions:
the available RB set is an RB set continuous in frequency domain;
the available RB set does not include an RB set with consistent LBT failures; or
a quantity of RB sets in any combination of consecutive RB sets in the available RB set is greater than or equal to a quantity of RB sets occupied by transmission of a PSSCH and/or a PSCCH.

Optionally, the RB set occupied by the transmission of the PSCCH and/or the PSSCH in the one time unit meets at least one of the following conditions:
the RB set occupied by the transmission of the PSCCH and/or the PSSCH in the one time unit is an RB set continuous in frequency domain; or
the RB set occupied by the transmission of the PSCCH and/or the PSSCH in the one time unit does not include an RB set with consistent LBT failures.

Optionally, a resource in the candidate resource set meets at least one of the following conditions:
being within one time unit in time domain; or
including a first quantity of RB sets in frequency domain, and occupying a second quantity of sub-channels in each of the RB sets.

Optionally, the first quantity and/or the second quantity meet at least one of the following conditions:
a product of the first quantity and the second quantity is equal to a quantity of sub-channels occupied by transmission of a PSCCH or a PSSCH;
the second quantity of sub-channels are consecutive sub-channels;
indexes of the second quantity of sub-channels occupied in different RB sets in the first quantity of RB sets are the same;
the first quantity of RB sets are consecutive RB sets;
the first quantity of RB sets do not include any unavailable RB set in the initial information;
the first quantity of RB sets do not include any RB set with consistent LBT failures in the initial information;
the first quantity is equal to a quantity of RB sets occupied by transmission of a PSCCH and/or a PSSCH in one time unit in the initial information; or
the first quantity of RB sets are RB sets occupied by transmission of a PSCCH and/or a PSSCH in one time unit in the initial information.

Optionally, the determining unit is specifically configured to:
determine the candidate resource set based on at least one of the initial information, a target time, or a target frequency domain, where a resource in the candidate resource set belongs to the target time in time domain and belongs to the target frequency domain in frequency domain.

Optionally, the target frequency domain meets at least one of the following conditions:
the target frequency domain is an RB set occupied by transmission of a PSCCH and/or a PSSCH in one time unit in the initial information;
the target frequency domain is a third quantity of consecutive RB sets in a resource pool, where the third quantity is greater than or equal to a quantity of RB sets occupied by transmission of a PSCCH and/or a PSSCH; or
the target frequency domain is all RB sets of a target type in a resource pool, where the RB sets of the target type include a fourth quantity of consecutive RB sets, and the fourth quantity is greater than or equal to a quantity of RB sets occupied by transmission of a PSCCH and/or a PSSCH.

Optionally, a resource in the target frequency domain does not include an RB set in at least one of the following cases:
an RB set with consistent LBT failures in the initial information;
a fifth quantity of consecutive RB sets, where the fifth quantity is less than a quantity of RB sets occupied by transmission of a PSCCH and/or a PSSCH; or
an independent RB set, where the independent RB set does not constitute consecutive RB sets with any other RB set in the resource pool.

Optionally, the obtaining unit is specifically configured to:
exclude a candidate resource of a target type from the candidate resource set, to obtain the available resource set, where the candidate resource of the target type is associated with a target RB set.

Optionally, the target RB set meets at least one of the following conditions:
the target RB set is an RB set with consistent LBT failures in the initial information;
the target RB set is an unavailable RB set in the initial information;
the target RB set is a sixth quantity of consecutive RB sets, where the sixth quantity is less than a quantity of RB sets occupied by transmission of a PSCCH and/or a PSSCH; or
the target RB set is an independent RB set, where the independent RB set does not constitute consecutive RB sets with any other RB set in the resource pool.

Optionally, a ratio of a quantity of resources in the available resource set to a quantity of resources in a first resource set is greater than or equal to a first threshold, and the first resource set includes any one of the following:
the first resource set includes all candidate resources in a resource selection window; or
the first resource set includes all candidate resources in a resource selection window other than a candidate resource of a target type.

Optionally, the apparatus further includes:
a calculating unit, configured to obtain a CBR, where the CBR is a ratio of a quantity of sub-channels whose RSSIs exceed a second threshold to a quantity of all sub-channels in a target measurement window.

Optionally, a definition of the RSSI includes any one of the following:
the RSSI is a linear average value of all received power values on orthogonal frequency division multiplexing OFDM symbols that are configured for a PSCCH and a PSSCH in one slot other than a starting symbol, where the starting symbol may be one symbol or two symbols; or
the RSSI is a maximum value of at least two values of a first value, a second value, and a third value, where the first value is a linear average value of received power values on all symbols between a first starting symbol and a second starting symbol in OFDM symbols configured for a PSCCH and a PSSCH in one slot; the second value is a linear average value of received power values on all symbols after the second starting symbol in the OFDM symbols configured for the PSCCH and the PSSCH in the one slot; and the third value is a linear average value of received power values on all symbols except the first starting symbol and the second starting symbol in the OFDM symbols configured for the PSCCH and the PSSCH in the one slot.

Optionally, a frequency domain range of the target measurement window is at least one of the following:
a frequency domain range of a resource pool;
an RB set except an unavailable RB set in the initial information in a resource pool; or
an RB set except an RB set with consistent LBT failures in the initial information in a resource pool.

According to a third aspect, the present application further provides a terminal device, where the terminal device includes a processor and a memory, where
the memory is configured to store a program; and
the processor is configured to execute the method according to the first aspect according to the program.

According to a fourth aspect, the present application further provides a storage medium, where the storage medium is configured to store a program, and the program runs on a processor to execute the method according to the first aspect.

It can be learned that the present application has the following beneficial effects:

The present application provides a resource determination method for sidelink operation on unlicensed spectrum. If a first terminal device needs to communicate with a second terminal device by using SL-U, this method can be executed to select an SL-U-based transmission resource. In this method, first, the first terminal device acquires initial information; next, the first terminal device determines a candidate resource set based on the initial information; and then, the first terminal device performs resource exclusion on the candidate resource set to obtain an available resource set. In this way, the first terminal device may select a target resource from the available resource set, so that the first terminal device can perform SL-U communication with the second terminal device based on the target resource. It can be learned that this method overcomes a problem that a sidelink resource selection solution for a licensed spectrum cannot be directly used, fully considers features of SL-U in a resource determination process, and proposes a method for determining an available resource set applicable to SL-U, thereby preparing for selection of a target transmission resource, and enabling terminal devices to perform effective communication by using SL-U.

### BRIEF DESCRIPTION OF THE DRAWINGS

To describe the technical solutions in embodiments of the present application more clearly, the following briefly describes the accompanying drawings required for describing the embodiments. Apparently, the accompanying drawings in the following description show merely some embodiments described in the present application, and a person of ordinary skill in the art may still derive other drawings from these accompanying drawings.
FIG. 1 is a schematic diagram of a correspondence between a sub-channel, an IRB, and a PRB.
FIG. 2 is a schematic flowchart of a resource determination method for sidelink operation on unlicensed spectrum according to an embodiment of the present application.
FIG. 3 is a schematic diagram of an RB set in initial information according to an embodiment of the present application.
FIG. 4 is a schematic diagram of information about a time during which consistent LBT failures occur according to an embodiment of the present application.
FIG. 5 is a schematic diagram of a candidate single-slot resource according to an embodiment of the present application.
FIG. 6 is another schematic diagram of a candidate single-slot resource according to an embodiment of the present application.
FIG. 7 is a schematic diagram of symbols in a slot according to an embodiment of the present application.
FIG. 8 is a schematic structural diagram of a resource determination apparatus for sidelink operation on unlicensed spectrum according to an embodiment of the present application.
FIG. 9 is a schematic structural diagram of a terminal device according to an embodiment of the present application.

### DETAILED DESCRIPTION OF THE EMBODIMENTS

To make the foregoing objects, features, and advantages of the present application clearer and easier to understand, the following further describes embodiments of the present application in detail with reference to the accompanying drawings and specific implementations. It may be understood that specific embodiments described herein are merely used to explain the present application, rather than limiting the present application. In addition, it should be further noted that, for ease of description, only parts related to the present application instead of all structures are shown in the accompanying drawings.

A terminal device that operates in an unlicensed spectrum (Unlicensed Spectrum) needs to meet limitations of an occupied channel bandwidth (Occupied Channel Bandwidth, OCB) and power spectral density (Power Spectral Density, PSD). Therefore, an interlaced resource block (Interlaced Resource Block, IRB) structure is introduced into new radio on unlicensed spectrum (New Radio on Unlicensed Spectrum, NR-U). In an SL-U mechanism, transmission of a PSCCH and transmission of a PSSCH support the IRB structure. In addition, in an SL-U system based on the IRB structure, a concept of a sub-channel in R16/R17 is used, and the sub-channel is a minimum granularity of PSSCH transmission. The sub-channel is defined as one or more IRBs. Therefore, the sub-channel is no longer formed by consecutive PRBs in frequency domain. A resource allocation mechanism in R16/R17 is designed for a sub-channel based on consecutive PRBs, and is not applicable to an IRB-based SL-U system.

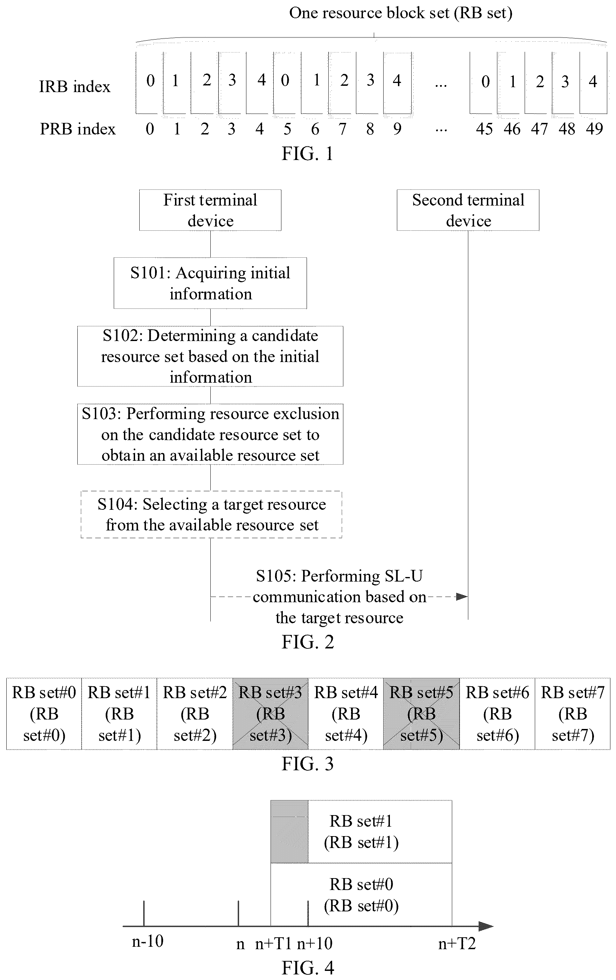

A relationship between a sub-channel, an IRB, and a PRB in SL-U may be understood as follows: a sub-channel is defined in one RB set, and one sub-channel is equal to K IRBs, that is, one sub-channel is equal to K IRBs in one RB set. PRBs included in an IRB with an index of m may be represented as {m+M, m+2M, m+3M, ...}, that is, one IRB includes a plurality of PRBs, and a gap between the PRBs is M. In a case that a sub-carrier spacing is 15 kilohertz (kilohertz, kHz), M is equal to 10, and K may be equal to 1 or 2; or in a case that a sub-carrier spacing is 30 kHz, M is equal to 5, and K may be equal to 1, where m ∈ {0, 1, ..., M-1}. For example, M = 5. For details on a relationship between an IRB, a PRB, and a sub-channel, reference may be made to FIG. 1. There is only one RB set in a resource pool, the RB set includes five IRBs whose indexes are 0, 1, 2, 3, and 4, and indexes of corresponding PRBs are 0, 1, 2, 3, 4, ..., 48, and 49. In this case, if K = 2, a sub-channel 0 includes an IRB 0 and an IRB 1 in the RB set, and a sub-channel 1 includes an IRB 2 and an IRB 3 in the RB set. Alternatively, if K = 1, the sub-channel 0 includes the IRB 0 in the RB set, and the sub-channel 1 includes the IRB 1 in the RB set.

To ensure that SL-U is widely used, embodiments of the present application provide a resource determination method applicable to SL-U. Features of SL-U, such as an RB set on which consistent LBT failures are detected, an IRB-based physical layer structure, and a definition of a sub-channel, are introduced into this method, thereby improving a sidelink resource allocation mechanism, and causing a resource in a determined available resource set applicable to SL-U communication. In this method, first, the first terminal device acquires initial information; next, the first terminal device determines a candidate resource set based on the initial information; and then, the first terminal device performs resource exclusion on the candidate resource set to obtain an available resource set. If the first terminal device needs to communicate with the second terminal device by using SL-U, the initial information may be configuration information of a resource pool and/or parameter information required for SL-U communication. In addition, after the available resource set is obtained, a target resource may be further selected from the available resource set. In this way, the first terminal device may perform SL-U communication with the second terminal device based on the target resource. It can be learned that this method overcomes a problem that a sidelink resource selection solution for a licensed spectrum cannot be directly used, fully considers features of SL-U in a resource determination process, and proposes a method for determining an available resource set applicable to SL-U, thereby preparing for selection of a target transmission resource, and enabling terminal devices to perform effective communication by using SL-U.

It should be noted that the resource determination method for sidelink operation on unlicensed spectrum may be implemented by a resource determination apparatus for sidelink operation on unlicensed spectrum provided in embodiments of the present application, and the resource determination apparatus for sidelink operation on unlicensed spectrum may be mounted into a terminal device or a functional module of a terminal device. The terminal device mentioned above may be any device that can implement the resource determination method for sidelink operation on unlicensed spectrum in embodiments of the present application. For example, the terminal device may be a smartphone, a vehicle-mounted terminal, or the like.

It should be noted that, when each terminal device needs to perform sidelink communication with another terminal device, the terminal device may serve as the first terminal device in embodiments of the present application, and the another terminal device may serve as the second terminal device, to execute the method provided in embodiments of the present application, thereby determining an available resource set from which a proper resource can be selected when the first terminal device communicates with the another terminal device by using SL-U.

To facilitate understanding of specific implementations of the resource determination method for sidelink operation on unlicensed spectrum provided in embodiments of the present application, the following describes the method with reference to the accompanying drawings.

FIG. 2 is a schematic flowchart of a resource determination method for sidelink operation on unlicensed spectrum according to an embodiment of the present application. As shown in FIG. 2, the method may be applied to a first terminal device, and is applicable to a process of determining, by the first terminal device, an available resource set for performing sidelink communication with a second terminal device when the first terminal device needs to communicate with the second terminal device by using a sidelink.

As shown in FIG. 2, the method may include, for example, Step S101 to Step S103.

Step S101: initial information is acquired.

The initial information refers to information required when the first terminal device performs SL-U communication with the second terminal device, and includes but is not limited to resource pool configuration information and/or transmission parameter information. The initial information may be configured by a higher layer (a medium access control (Medium Access Control, MAC) layer, a radio resource control (Radio Resource Control, RRC) layer, or the like) of the first terminal device, configured by a base station, indicated by the higher layer, pre-defined, or pre-configured.

In an example, the initial information may include at least one of the following information: (1) an available RB set; (2) an unavailable RB set; (3) an RB set with consistent LBT failures; (4) time information corresponding to an RB set with consistent LBT failures; (5) a quantity of RB sets occupied by transmission of a PSCCH and/or a PSSCH in one time unit; (6) an RB set occupied by transmission of a PSCCH and/or a PSSCH in one time unit; (7) a quantity of sub-channels occupied by transmission of a PSCCH and/or a PSSCH in one time unit; (8) a quantity of sub-channels occupied by transmission of a PSCCH and/or a PSSCH in one RB set in one time unit; or (9) a starting PRB of a resource pool.

Optionally, the initial information may further include at least one of the following information: (10) a resource pool; (11) a layer 1 (Layer 1, L1) priority; (12) a remaining service packet transmission delay; (13) a resource reservation interval (or resource reservation period); (14) a resource set on which re-evaluation (Re-evaluation) and/or pre-emption (Pre-emption) may be performed; or (15) a resource selection mechanism indication.

The information (1) in the initial information may refer to an available RB set in a resource pool, or a frequency domain range of a resource selection window, or an available RB set in a resource selection window, or an RB set available for transmission of a PSCCH and a PSSCH. That is, a candidate resource, an initialized candidate resource set, an available resource set, and a transmission resource of a PSCCH and a PSSCH all need to be located in these RB sets. In particular, for a plurality of times of transmission of a transport block (Transport Block, TB), or one transmission and a reserved subsequent transmission, each time of transmission needs to be located in these RB sets. It should be noted that the RB sets in the information (1) need to be RB sets continuous in frequency domain or RB sets with consecutive indexes.

In specific implementation, the information (1) may be determined by the higher layer (for example, a MAC layer) of the first terminal device and transmitted to a physical layer of the first terminal device. Alternatively, the information (1) may be determined by the physical layer of the first terminal device. For example, the higher layer determines the information (1). For example, an RB set that meets at least one of the following conditions may be used as an available RB set: a condition 11: an available RB set is an RB set continuous in frequency domain; a condition 12: an available RB set does not include an RB set with consistent LBT failures; or a condition 13: a quantity of RB sets in any combination of consecutive RB sets in an available RB set is greater than or equal to a quantity of RB sets that need to be occupied by transmission of a PSSCH and/or a PSCCH (or a MAC protocol data unit (Protocol Data Unit, PDU)). In the condition 11, an available RB set being an RB set continuous in frequency domain may refer to that: indexes of RB sets are consecutive. Herein, the "RB set" may also be represented as "RB set(s)", indicating that the RB set includes one or more RB sets. If the RB set includes a plurality of RB sets, it is required that the plurality of RB sets should be continuous in frequency domain. Alternatively, the available RB set may include only one RB set.

It may be understood that when determining an available RB set, the higher layer needs to consider whether an RB set on which consistent LBT failures are detected exists. A final effect to be achieved is that indicated RB sets do not include an RB set on which consistent LBT failures are detected. As shown in FIG. 3, RB set#3 and RB set#5 represent RB sets on which consistent LBT failures are detected. Therefore, available RB sets indicated by the higher layer may include RB set#0, RB set#1, RB set#2, RB set#4, RB set#6, and RB set#7. It is assumed that the available RB sets may be used for transmission of a PSCCH and/or a PSSCH, that is, the condition 13 is met (FIG. 3 shows three combinations of any consecutive RB sets, which are RB set#0+RB set#1+RB set#2, RB set#4, and RB set#6+RB set#7, respectively, that is, a combination of any consecutive RB sets herein indicates a combination of a largest quantity of consecutive RB sets, for example, RB set#0+RB set+1 may not be referred to as a combination of consecutive RB sets), and RB sets in the available RB sets need to be consecutive. It is assumed that transmission of a PSCCH and/or a PSSCH needs to occupy two RB sets. In this case, available RB sets determined by the higher layer may be RB set#0, RB set#1, RB set#2, RB set#6, and RB set#7, where RB set#0, RB set#1, and RB set#2 represent the first subset, and RB set#6 and RB set#7 represent the second subset. RB set#4 is an independent RB set, and does not constitute consecutive RB sets with another RB set. Therefore, RB set#4 does not meet a requirement of transmission of a PSCCH and/or a PSSCH, and cannot be used as an available RB set.

The information (2) in the initial information may refer to an unavailable RB set located in a resource pool, and is used to indicate an RB set that cannot be used in a resource selection process. The information (2) may be further described as: an unavailable RB set in the resource pool, or an RB set that cannot be used in an initialized resource set, or an RB set that cannot be used in transmission of a PSCCH and/or a PSSCH.

The information (3) in the initial information may refer to an RB set on which consistent LBT failures (Consistent LBT failure) are detected in a resource pool, and the RB set may be an unavailable RB set.

The information (4) in the initial information may include at least one of the following: a start time corresponding to an RB set with consistent LBT failures, a duration corresponding to an RB set with consistent LBT failures, or an expiration time corresponding to an RB set with consistent LBT failures. The information (3) and the information (4) may be combined to determine an unavailable RB set and a time period during which the RB set is unavailable. In an example, the resource selection window determined by the first terminal device is shown in FIG. 4. The resource selection window includes [n+T1, n+T2] in a time domain, and includes RB set#0 and RB set#1 in a frequency domain. In addition, an RB set on which consistent LBT failures are detected is RB set#1, a start time corresponding to the RB set with consistent LBT failures is n-10, and a duration corresponding to the consistent LBT failures is 20 slots, that is, an expiration time is n+10. In this case, it may be determined that RB set#1 is unavailable within a time period from n+T1 to n+10 in the resource selection window.

For the information (5) in the initial information, for example, when a result of the information (5) is 2, it indicates that a single time of transmission of a PSCCH and/or a PSSCH needs to be performed in two RB sets, or it indicates that a single-slot candidate resource needs to be located in two RB sets. However, positions of the two RB sets may not be fixed. The two RB sets may be RB set#0+RB set#1 or RB set#1+RB set#2 in the resource pool. In addition, the two RB sets further need to be consecutive, that is, the information (5) may be represented as a quantity of consecutive RB sets occupied by transmission of a PSCCH and/or a PSSCH in one time unit. The information (5) may indicate that any transmission of one transport block (Transport Block, TB) needs to occupy two RB sets, or each time of transmission in initial transmission or reserved transmission of a PSCCH and/or a PSSCH needs to occupy two RB sets, or a MAC PDU needs to occupy two RB sets.

In specific implementation, the information (5) may be determined by the higher layer of the first terminal device and transmitted to a physical layer of the first terminal device. Alternatively, the information (5) may be determined by the physical layer of the first terminal device. For example, the higher layer determines the information (5). For example, at least one of the following factors may be considered for the RB sets counted in the information (5): a total quantity of RB sets configured in a resource pool, an RB set on which consistent LBT failures are detected, a quantity of sub-channels occupied by transmission of a PSCCH and/or a PSSCH, a quantity of sub-channels occupied by transmission of a PSCCH and/or a PSSCH in one RB set, or consecutive RB sets occupied by transmission of a PSCCH and/or a PSSCH, where quantities of sub-channels occupied by transmission of a PSCCH and/or a PSSCH in different RB sets are the same and indexes of the occupied sub-channels are also the same. For example, still referring to FIG. 3, transmission of a PSCCH and/or a PSSCH occupies four sub-channels, and occupies at least one sub-channel in one RB set. Therefore, the transmission of the PSCCH and/or the PSSCH is performed at a maximum of four RB sets. In addition, considering that quantities of sub-channels occupied in different RB sets are the same, indexes of the sub-channels are also the same, and the transmission of the PSCCH and/or the PSSCH occupies consecutive RB sets, it is determined that the quantity of RB sets in the information (5) can only be 1 or 2.

For the information (6) in the initial information, for example, if a result of the information (6) is RB set#1 and RB set#2, it may indicate that a single time of transmission of a PSCCH and/or a PSSCH needs to be performed in the two RB sets, or it may indicate that a single-slot candidate resource needs to be located in the two RB sets, or it may indicate that any transmission in one TB needs to be performed in the two RB sets, or it may indicate that initial transmission and a retransmission resource reserved for the initial transmission need to be located in the two RB sets, or it may indicate that transmission of a MAC PDU needs to be performed in the two RB sets, and the two RB sets need to be consecutive.

In specific implementation, the information (6) may be determined by the higher layer of the first terminal device and transmitted to a physical layer of the first terminal device. Alternatively, the information (6) may be determined by the physical layer of the first terminal device. For example, the higher layer determines the information (6). For example, an RB set that meets at least one of the following conditions may be used as the information (6): a condition 21: the RB set occupied by the transmission of the PSCCH and/or the PSSCH in the one time unit is an RB set continuous in frequency domain; a condition 22: the RB set occupied by the transmission of the PSCCH and/or the PSSCH in the one time unit does not include an RB set with consistent LBT failures; a condition 23: the quantity of RB sets occupied by the transmission of the PSCCH and/or the PSSCH in the one time unit is equal to a quantity of RB sets required by the transmission of the PSCCH and/or the PSSCH; or a condition 24: a quantity of RB sets in any combination of consecutive RB sets in the RB set occupied by the transmission of the PSCCH and/or the PSSCH in the one time unit is greater than or equal to a quantity of RB sets required by the transmission of the PSCCH and/or the PSSCH. In the condition 21, the RB set being continuous in frequency domain may refer to that: indexes of RB sets are consecutive. Herein, the "RB set" may also be represented as "RB set(s)", indicating that the RB set includes one or more RB sets. If the RB set includes a plurality of RB sets, it is required that the plurality of RB sets should be continuous in frequency domain. Alternatively, the available RB set may include only one RB set.

It may be understood that when determining the RB set in the information (6), the higher layer needs to consider the following factors: a total quantity of RB sets configured in a resource pool, an RB set on which consistent LBT failures are detected, a quantity of sub-channels occupied by transmission of a PSCCH and/or a PSSCH, a quantity of sub-channels occupied by transmission of a PSCCH and/or a PSSCH in one RB set, or consecutive RB sets occupied by transmission of a PSCCH and/or a PSSCH, where quantities of sub-channels occupied by transmission of a PSCCH and/or a PSSCH in different RB sets are the same and indexes of the occupied sub-channels are also the same. Still as shown in FIG. 3, transmission of a PSCCH and/or a PSSCH occupies four sub-channels, and occupies at least one sub-channel in one RB set, that is, the transmission of the PSCCH and/or the PSSCH is performed at a maximum of four RB sets. In addition, considering that quantities of sub-channels occupied in different RB sets are the same, indexes of the occupied sub-channels are also the same, and the transmission of the PSCCH and/or the PSSCH occupies consecutive RB sets; if the quantity of RB sets occupied by the transmission of the PSCCH and/or the PSSCH may be 1, the information (6) determined by the higher layer includes: RB set#0, RB set#1, RB set#2, RB set#4, RB set#6, and RB set#7. Alternatively, if the quantity of RB sets occupied by the transmission of the PSCCH and/or the PSSCH may be 2, the information (6) determined by the higher layer includes: RB set#0+RB set#1, RB set#1+RB set#2, and RB set#6+RB set#7, that is, the indicated RB sets may be non-consecutive as a whole. However, any combination of consecutive RB sets in the indicated RB sets may meet a requirement of the transmission of the PSCCH and/or the PSSCH. In addition, the higher layer may further randomly select one combination, for example, RB set#0+RB set#1, from the foregoing three combinations and indicate the combination to the physical layer. In this case, the RB sets are consecutive and may meet the requirement of the transmission of the PSCCH and/or the PSSCH.

The information (7) in the initial information may be described as a quantity of sub-channels occupied by transmission of a PSCCH and/or a PSSCH in all used RB sets in one slot, or a quantity of sub-channels occupied by a single time of transmission of a PSCCH and/or a PSSCH in all used RB sets.

For the information (8) in the initial information, in one case, sub-channels occupied by transmission of a PSCCH and/or a PSSCH in each RB set may be consecutive; or, in another case, sub-channels occupied by transmission of a PSCCH and/or a PSSCH in each RB set may be non-consecutive.

It should be noted that in the information (5) to the information (8) of the initial information, the time unit may be a subframe, a slot, some slots, a symbol, or a combination of a plurality of symbols.

It should be noted that, in the information (5) to the information (8) of the initial information, "transmission of a PSCCH and/or a PSSCH in one time unit" may also be understood or described as: a single time of transmission of a PSCCH and/or a PSSCH, any transmission of a PSCCH and/or a PSSCH in one TB, or initial transmission and reserved transmission of a PSCCH and/or a PSSCH.

The information (9) in the initial information may be described as a starting PRB in the first RB set in a resource pool, or may be described as a starting PRB of the first sub-channel in the first RB set in a resource pool, or may be described as a starting PRB of the first sub-channel in a resource pool, where the first sub-channel refers to the lowest sub-channel in frequency domain, rather than the sub-channel with the smallest index.

It should be noted that at least one of the following factors needs to be considered in determining an available RB set, a quantity of RB sets, or an occupied RB set in the initial information: a total quantity of RB sets configured in a resource pool, an RB set on which consistent LBT failures are detected, a quantity of sub-channels occupied by transmission of a PSCCH and/or a PSSCH, a quantity of sub-channels occupied by transmission of a PSCCH and/or a PSSCH in one RB set, or consecutive RB sets occupied by transmission of a PSCCH and/or a PSSCH, where quantities of sub-channels occupied by transmission of a PSCCH and/or a PSSCH in different RB sets are the same and indexes of the occupied sub-channels are also the same.

The information (10) in the initial information is used to indicate a range of resource selection, and the resource selection is performed in the resource pool. The information (15) in the initial information may include full sensing (Full sensing), partial sensing (Partial sensing), random resource selection (Random resource selection), any combination thereof, or the like.

In some implementations, the initial information may be information that is used for transmission of a PSCCH and/or a PSSCH and that is provided by the higher layer of the first terminal device to the physical layer at an instant of triggering resource selection.

It can be learned that the first terminal device acquires the initial information based on Step S101, thereby providing a reliable data basis for selecting a proper resource for subsequent SL-U. Step S101 may be, for example, an operation executed by the physical layer of the first terminal device.

Step S102: a candidate resource set is determined based on the initial information.

The candidate resource set may be understood as an initialized candidate resource set determined in the resource pool or the resource selection window, and is used to exclude a resource and determine a final available resource set subsequently. Embodiments of the present application provide the following three possible manners of determining the candidate resource set.

In the first possible implementation, the candidate resource set determined in Step S102 may be further represented as a set of candidate single-slot resources. For example, Step S102 may include: determining the candidate resource set based on at least one of the initial information, a target time, or a target frequency domain, where a resource in the candidate resource set is located in the one time unit in time domain, resources in the candidate resource set are located in a first quantity of RB sets in frequency domain, and each RB set includes a second quantity of sub-channels.

The resources in the candidate resource set need to meet at least one of the following conditions: a condition 31: a product of the first quantity and the second quantity is equal to a quantity of sub-channels occupied by transmission of a PSCCH or a PSSCH; a condition 32: the second quantity of sub-channels are consecutive sub-channels; a condition 33: indexes of second quantities of sub-channels occupied in different RB sets in the first quantity of RB sets are the same; a condition 34: the first quantity of RB sets are consecutive RB sets; a condition 35: the first quantity of RB sets do not include any unavailable RB set in the initial information; a condition 36: the first quantity of RB sets do not include any RB set with consistent LBT failures in the initial information; a condition 37: the first quantity is equal to a quantity of RB sets occupied by transmission of a PSCCH and/or a PSSCH in one time unit in the initial information; a condition 38: the first quantity of RB sets are RB sets occupied by transmission of a PSCCH and/or a PSSCH in one time unit in the initial information; or a condition 39: the first quantity of RB sets are all or some of available RB sets in the initial information.

It may be understood that the candidate resources in the candidate resource set may be understood as: being within the one time unit in time domain, and being within N RB sets in frequency domain, where each RB set includes M sub-channels. Determining the candidate resources is equivalent to a process of determining N and M. Herein, N and M respectively correspond to the first quantity and the second quantity in the foregoing description.

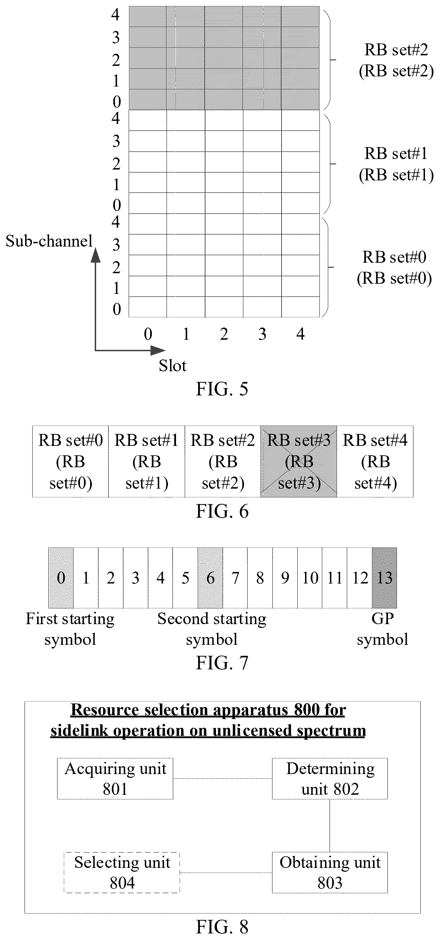

In an example, it is assumed that transmission of the first terminal device needs to occupy two sub-channels, and is performed in two consecutive RB sets. That is, the transmission of the first terminal device needs to occupy two consecutive RB sets and occupy one sub-channel in each RB set, and indexes of the two occupied sub-channels need to be the same. For example, a sub-channel 1 and a sub-channel 2 in the first RB set are occupied, and a sub-channel 1 and a sub-channel 2 in the second RB set are also occupied. As shown in FIG. 5, RB set#2 is an unavailable RB set (for example, RB set#2 is an RB set on which consistent LBT failures are detected), and a candidate single-slot resource is defined as occupying two consecutive RB sets, where each RB set occupies one sub-channel, and indexes of the two sub-channels are the same. In addition, the candidate single-slot resource cannot overlap with an unavailable RB set. In this case, for a slot 0, (RB set#0-sub-channel 0)+(RB set#1-sub-channel 0) is one candidate single-slot resource; (RB set#1-sub-channel 0)+(RB set#2-sub-channel 0) overlaps with the unavailable RB set#2, and therefore cannot be used as one candidate single-slot resource. It can be seen that, in the case shown in FIG. 5, each slot includes five candidate single-slot resources (which are (RB set#0-sub-channel 0)+(RB set#1-sub-channel 0), (RB set#0-sub-channel 1)+(RB set#1-sub-channel 1, (RB set#0-sub-channel 2)+(RB set#1-sub-channel 2), (RB set#0-sub-channel 3)+(RB set#1-sub-channel 3), and (RB set#0-sub-channel 4)+(RB set#1-sub-channel 4), respectively. The five slots included in the resource selection window include a total of 25 candidate single-slot resources.

It should be noted that, sub-channels in the accompanying drawings shown in embodiments of the present application are for illustration purposes only, and do not indicate actual sub-channel structures. An actual sub-channel structure may be consecutive PRBs or IRBs.

In the second possible implementation, for example, Step S102 may include: determining the candidate resource set based on at least one of the initial information, a target time, or a target frequency domain, where a resource in the candidate resource set belongs to the target time in time domain and belongs to the target frequency domain in frequency domain.

The target frequency domain meets at least one of the following conditions: a condition 41: the target frequency domain is an RB set occupied by transmission of a PSCCH and/or a PSSCH in one time unit in the initial information (that is, the higher layer of the first terminal device specifies a specific RB set as a frequency domain of the resource selection window); a condition 42: the target frequency domain is a third quantity of consecutive RB sets in a resource pool, where the third quantity is greater than or equal to a quantity of RB sets occupied by transmission of a PSCCH and/or a PSSCH; or a condition 43: the target frequency domain is all RB sets of a target type in a resource pool, where the RB sets of the target type include a fourth quantity of consecutive RB sets, and the fourth quantity is greater than or equal to a quantity of RB sets occupied by transmission of a PSCCH and/or a PSSCH. A resource in the target frequency domain does not include an RB set in any one of the following cases: a case 1: an RB set with consistent LBT failures in the initial information; a case 2: a fifth quantity of consecutive RB sets, where the fifth quantity is less than a quantity of RB sets occupied by transmission of a PSCCH and/or a PSSCH; or a case 3: an independent RB set, where the independent RB set does not constitute consecutive RB sets with any other RB set in the resource pool. In the case 1, a restriction in time domain may include: all times in the resource selection window, or a time determined based on the information (4) in the initial information. In the case 2, the fifth quantity of consecutive RB sets do not include an unavailable RB set and/or an RB set with consistent LBT failures in the initial information, and the fifth quantity of consecutive RB sets do not constitute consecutive RB sets with another RB set in the resource pool. In the case 3, it is required that a quantity of RB sets required by actual transmission should be greater than 1.

Alternatively, the target frequency domain may be all frequency domains or all sub-channels in the resource pool.

In an example, the higher layer of the first terminal device provides a specified RB set. It may be understood that, the first terminal device uses all candidate single-slot resources that are located in the RB sets in the resource pool and that are indicated within a time period [n+T1, n+T2] as candidate resources, and a quantity of the candidate resources is denoted as Mtotal. Herein, [n+T1, n+T2] indicates the target time. As shown in FIG. 5, the higher layer indicates that RB sets occupied by transmission of a PSCCH and/or a PSSCH are RB set#0 and RB set#1, and candidate resource sets are all candidate single-slot resource sets in only RB set#0 and RB set#1. It is assumed that transmission of the first terminal device needs to occupy two sub-channels, and indexes of sub-channels located in different RB sets need to be the same. In this case, Mtotal is equal to 25.

In another example, the higher layer of the first terminal device indicates a quantity of consecutive RB sets occupied by transmission of a PSCCH and/or a PSSCH, a quantity of sub-channels occupied by transmission of a PSCCH and/or a PSSCH, or a quantity of sub-channels occupied by transmission of a PSCCH and/or a PSSCH in each RB set. It may be understood that, the first terminal device uses all candidate single-slot resources in a range in which RB sets are consecutive and a quantity of the consecutive RB sets is greater than or equal to a quantity of RB sets occupied by transmission of a PSCCH and/or a PSSCH and within a time period [n+T1, n+T2] as candidate resources. As shown in FIG. 6, the resource pool includes a total of five RB sets, where each RB set includes five sub-channels, and RB set#3 is an RB set on which consistent LBT failures are detected, that is, an unavailable RB set. Transmission of a PSCCH and/or a PSSCH occupies two RB sets and occupies two sub-channels. In addition, indexes of sub-channels occupied in different RB sets are the same. Therefore, candidate single-slot resources can be defined only in RB set#0+RB set#1 and RB set#1+RB set#2, there are five candidate single-slot resources in RB set#0 and RB set#1, and there are five candidate single-slot resources in RB set#1 and RB set#2. In this case, Mtotal is equal to 10. In this example, a candidate single-slot resource cannot be defined in the independent RB set#4, or a candidate single-slot resource cannot be defined in RB set#3+RB set#4. In addition, the physical layer of the first terminal device may determine that RB set#0, RB set#1, and RB set#2 are available RB sets, and report an available resource set determined after resource exclusion to the higher layer. In addition to the available resource set, the physical layer further needs to report RB sets of the determined available resource set, that is, RB set#0, RB set#1, and RB set#2.

In the third possible implementation, for example, Step S102 may include: combining, based on the initial information, all resources in the resource selection window into the candidate resource set. For details on this implementation, reference may be made to a process of determining a set of all candidate single-slot resources in a resource selection procedure of a new radio on vehicle to everything mode 2 (New Radio on Vehicle to Everything Mode 2, NR-V2X Mode 2). A process of determining the set of all candidate single-slot resources in the resource selection procedure of the NR-V2X Mode 2 may include Step S11 to Step S14. In Step S11, candidate single-slot resources Rx,y are L_{subCH} consecutive sub-channels in t_{y} slots (slot) within a time [n+T1, n+T2]. Herein, 0 ≤ T1 ≤ T_{proc,1}, where T_{proc,1} indicates a transmission processing delay of the first terminal device, and a value of T_{proc,1} may be {3, 5, 9, 17} physical slots, which respectively correspond to sub-carrier spacings (sub-carrier space, SCS) of {15, 30, 60, 120} kHz. In addition, T₂ₘᵢₙ ≤ T2 ≤ remaining PDB, where T₂ₘᵢₙ is a minimum value of T2 configured for a higher-layer parameter t2min_SelectionWindow, the remaining PDB is a remaining packet delay budget (remaining packet delay budget), and a total quantity of candidate single-slot resources in the resource selection window is Mtotal. In Step S12, the first terminal device continuously monitors slots in a sensing window [n-T0, n-T_{proc,0}), and performs PSCCH or PSSCH decoding, and measurement of PSSCH-reference signal received power (Reference Signal Received Power, RSRP) or PSCCH-RSRP. Herein, T0 is a length of the sensing window configured by the higher layer, T_{proc,0} is a time for the first terminal device to process a previous sensing result, and a value of T_{proc,0} is {1, 1, 2, 4} slots, which respectively correspond to SCSs of {15, 30, 60, 120} kHz. In Step S13, Th(pi,pj) indicates the i^{th} RSRP field in sl-ThresPSSCH-RSRP-List-r16, where i = pi + (pj-1) * 8, pi indicates a priority indicated in received sidelink control information (Sidelink Control Information, SCI), pj indicates a priority of transmitting transmission of the first terminal device, and pj = prio_{TX}. In Step S14, an initialized set S_{A} is the set of all the candidate single-slot resources.

It can be learned that the first terminal device determines the candidate resource set based on Step S102, thereby preparing for subsequent resource exclusion and resource selection. Step S102 may be, for example, an operation executed by the physical layer of the first terminal device.

Step S103: resource exclusion is performed on the candidate resource set to obtain an available resource set.

In specific implementation, after obtaining the candidate resource set, the first terminal device may flexibly determine, based on a requirement, an exclusion policy to be adopted for the resource exclusion. A type of a resource to be excluded may include at least one of the following: a candidate resource of a target type, a candidate resource determined based on SCI decoding information and an RSRP measurement value, or a candidate resource determined based on an unmonitored slot and a period. A type of a candidate resource to be excluded is merely described herein, and a sequence of excluding resources is not limited. For example, a sequence of resource exclusion operations may be as follows: first, a candidate resource of the target type is excluded; then, a candidate resource determined based on an unmonitored slot and a period is excluded; and finally, a candidate resource determined based on SCI decoding information and an RSRP measurement value is excluded. Alternatively, the sequence of the resource exclusion operations may be as follows: first, a candidate resource determined based on an unmonitored slot and a period is excluded; then, a candidate resource of the target type is excluded; and finally, a candidate resource determined based on SCI decoding information and an RSRP measurement value is excluded. A candidate resource of the target type being associated with a target RB set may refer to that: the candidate resource of the target type and the target RB set have an intersection (which may also be referred to as an overlap), including partial overlapping or complete overlapping between the candidate resource of the target type and the target RB set.

The target RB set meets at least one of the following conditions: a condition 51: the target RB set is an RB set with consistent LBT failures in the initial information; a condition 52: the target RB set is an unavailable RB set in the initial information; a condition 53: the target RB set is a sixth quantity of consecutive RB sets, where the sixth quantity is less than a quantity of RB sets occupied by transmission of a PSCCH and/or a PSSCH; or a condition 54: the target RB set is an independent RB set, where the independent RB set does not constitute consecutive RB sets with any other RB set in the resource pool. In the condition 54, a quantity of RB sets required by actual transmission needs to be greater than 1.

It may be understood that, after the resource exclusion in Step S103 is performed, a ratio of a quantity of resources in the available resource set to a quantity of resources in a first resource set is greater than or equal to a first threshold (for example, 20%). The available resource set may be further represented as a set of remaining candidate resources or a set of remaining candidate resources that meet a requirement. The first resource set is any one of the following: the first resource set includes all candidate resources in a resource selection window; the first resource set includes all candidate resources except the candidate resource of the target type in the resource selection window; the first resource set includes all candidate resources in the target frequency domain; or the first resource set includes all candidate resources in the target frequency domain other than the candidate resource of the target type.

For example, the first resource set includes 10 resources. In this case, a quantity of resources included in the available resource set is greater than or equal to 2 (20%*10).

It should be noted that if the quantity of the resources in the available resource set (or the set of the remaining candidate resources) does not meet a requirement after the resource exclusion is performed, an RSRP threshold value needs to be increased. Then, exclusion of resources or exclusion of some resources is re-executed.

It can be learned that the first terminal device determines the available resource set based on Step S103, thereby preparing for subsequent resource selection. Step S103 may be, for example, an operation executed by the physical layer of the first terminal device.

In an example, after Step S103, the method may further include: transmitting, by the physical layer of the first terminal device, the available resource set and an RB set in which the available resource set is located to the higher layer, so that the higher layer executes a selection operation in the following Step S104.

Optionally, after Step S103, the method may further include step S104.

Step S104: a target resource is selected from the available resource set, where the target resource is used by the first terminal device to perform sidelink communication on unlicensed spectrum with the second terminal device.

In specific implementation, after obtaining the available resource set, the first terminal device may flexibly determine, based on a requirement, a selection policy to be adopted for resource selection. A specific selection policy is not limited in embodiments of the present application.

Optionally, after Step S104, the method may further include: step S105.

Step S105: the first terminal device performs SL-U communication with the second terminal device based on the target resource.

In this way, according to the method, after acquiring initial information of a peer end corresponding to a sidelink, the first terminal device successively determines a candidate resource set and performs resource exclusion, to obtain an available resource set; and the first terminal device may select a proper target resource according to the available resource set and an RB set in which the available resource set is located, thereby preparing for SL-U communication between the first terminal device and the peer end by using the target resource.

In some implementations, considering that a transmission parameter is generally determined based on a CBR in a congestion control mechanism, according to the foregoing definition of the RSSI provided in embodiments of the present application, the CBR becomes more accurate. Based on the accurate CBR, a more proper transmission parameter can be obtained by matching in the congestion control mechanism, thereby improving service transmission performance.

In an example, the method may further include: obtaining a corresponding transmission parameter by matching based on the CBR; and transmitting a to-be-transmitted service to the second terminal device along an SL-U based on the target resource and the transmission parameter.

The transmission parameter may include a first parameter set and a second parameter set, where the first parameter set includes at least one of the following parameters: maximum transmit power, a quantity of times of retransmission, a quantity of sub-channels occupied by a resource, or a modulation and coding scheme (Modulation and Coding Scheme, MCS) range; and the second parameter set includes a channel occupancy ratio (Channel Occupancy Ratio, CR) upper limit. If a measured channel occupancy ratio exceeds the channel occupancy ratio upper limit, transmission of the to-be-transmitted service is discarded.

In addition, to further optimize the first possible implementation in Step S102, the method may further include: obtaining a CBR, where the CBR is a ratio of a quantity of sub-channels whose RSSIs exceed a second threshold to a quantity of all sub-channels in a target measurement window. Optionally, parameters such as a quantity of sub-channels occupied by transmission of a PSCCH and/or a PSSCH and maximum transmit power may be determined based on a measurement result of the CBR. In this way, transmission reliability can be ensured, thereby improving system reliability. Several RSSI calculation manners are defined in embodiments of the present application. For details, reference may be made to descriptions of related parts in the following.

A frequency domain range of the target measurement window includes at least one of the following: a frequency domain range of a resource pool and/or a resource selection window; an RB set in a resource pool and/or a resource selection window except an unavailable RB set in the initial information; an RB set in a resource pool and/or a resource selection window except an RB set with consistent LBT failures in the initial information; the target frequency domain; an RB set in the target frequency domain except an unavailable RB set in the initial information; or an RB set in the target frequency domain except an RB set with consistent LBT failures in the initial information.

A process of measuring the CBR may include: determining a ratio of a quantity of sub-channels that meet a second condition to a quantity of all sub-channels in the target measurement window as the CBR, where the second condition may be: a first RSSI corresponding to a sub-channel exceeds a preset threshold.

To obtain more accurate CBR, a more proper RSSI calculation manner is designed. Each slot includes a plurality of symbols, among which there are one or two candidate starting symbols for transmission of a PSCCH and/or a PSCCH. An RSSI is defined as at least one of the following: a linear average value of all received power values on orthogonal frequency division multiplexing OFDM symbols configured for a PSCCH and a PSSCH in one slot other than a starting symbol; or a maximum value of at least two values of a first value, a second value, and a third value. The first value is a linear average value of received power values on all symbols between a first starting symbol and a second starting symbol (not including the first starting symbol and the second starting symbol) in OFDM symbols configured for a PSCCH and a PSSCH in one slot; the second value is a linear average value of received power values on all symbols after the second starting symbol (not including the second starting symbol) in the OFDM symbols configured for the PSCCH and the PSSCH in the one slot; and the third value is a linear average value of received power values on all symbols except the first starting symbol and the second starting symbol in the OFDM symbols configured for the PSCCH and the PSSCH in the one slot. The first starting symbol herein indicates the first candidate starting symbol for transmission of a PSCCH and/or a PSCCH in one slot, and the second starting symbol indicates the second candidate starting symbol for the transmission of the PSCCH and/or the PSSCH in the one slot. As shown in FIG. 7, a slot includes 14 symbols, among which 13 symbols are symbols (symbol 0 to symbol 12) configured for the transmission of the PSCCH and the PSSCH, and the last symbol is used for reception/transmission switching. It is assumed that energy values measured on the symbols are P0 to P13. In one case, the RSSI is defined as follows: RSSI = (P1 + P2 + ... + P5 + P7 + ... + P12)/11. In another case, RSSI = Max{RSSI-1, RSSI-2}, or RSSI = Max{RSSI-1, RSSI-2, RSSI-3}, or RSSI = Max{RSSI-1, RSSI-3}, where RSSI-1 = (P1 + P2 + ... + P5 + P7 + ... + P12)/11, RSSI-2 = (P1 + P2 + ... + P5)/5, and RSSI-3 = (P7 + P8 + ... + P12)/6.

Embodiments of the present application may further include a process of measuring a channel occupancy ratio (Channel Occupancy Ratio, CR). The CR indicates a ratio of a quantity of sub-channels occupied in a measurement window and/or sub-channels authorized to be occupied (expected to be occupied) to a quantity of all sub-channels in the measurement window. A frequency domain range of the measurement window for measuring the CR incudes at least one of the following: a frequency domain range of a resource pool or a resource selection window; an RB set in a resource pool or a resource selection window except an unavailable RB set in the initial information; an RB set in a resource pool or a resource selection window except an RB set with consistent LBT failures in the initial information, the target frequency domain; an RB set in the target frequency domain except an unavailable RB set in the initial information; or an RB set in the target frequency domain except an RB set with consistent LBT failures in the initial information. For example, the resource pool includes three RB sets, that is, RB set#0, RB set#1, and RB set#2, where RB set#0 is an RB set on which consistent LBT failures are detected. In this case, the frequency domain range for measuring the CR includes only RB set#1 and RB set#2.

It can be learned that a more accurate CBR can be obtained by using the definition of the RSSI and the CBR measurement manner provided in embodiments of the present application, thereby determining a proper transmission parameter in a congestion control process.

It should be noted that the definition of the RSSI, the CR measurement manner, and the CBR measurement manner may be executed before Step S102, or may be executed after Step S102.

It should be noted that, the definition of the RSSI, the CR measurement manner, the CBR measurement manner, and the process of determining the transmission parameter provided in embodiments of the present application may be separately implemented as embodiments, or may be protected together with the method shown in FIG. 2.

In this way, according to the resource determination mechanism for SL-U provided in embodiments of the present application, on one hand, complexity of an overall resource selection procedure can be reduced, resource indication overheads can be reduced, and an impact of a transmission failure caused by a channel access failure is reduced, thereby increasing transmission efficiency. On the other hand, an RSSI measurement method applicable to a special structure of SL-U is also provided, to ensure that RSSI measurement is more accurate, thereby improving CBR measurement accuracy.

It should be noted that, in the foregoing embodiments, the first terminal device is used as an execution body to describe how to select an SL-U resource when the first terminal device needs to communicate with the second terminal device by using SL-U. When another terminal device needs to communicate with another terminal device by using SL-U, the method may also be executed. For details, reference may be made to the embodiment shown in FIG. 2. For example, when the second terminal device needs to communicate with the first terminal device by using SL-U, the second terminal device may also be used as an execution body of the method, to select a resource to be used to perform SL-U communication with the first terminal device. For details, reference may be made to specific embodiments in which the first terminal device and the second terminal device in the steps of the foregoing method are interchanged and the second terminal device executes the method.

Correspondingly, an embodiment of the present application further provides a resource selection apparatus 800 for sidelink operation on unlicensed spectrum, as shown in FIG. 8. The apparatus 800 is applied to a first terminal device and includes:
an acquiring unit 801, configured to acquire initial information;
a determining unit 802, configured to determine a candidate resource set based on the initial information; and
an obtaining unit 803, configured to perform resource exclusion on the candidate resource set to obtain an available resource set.

Optionally, the apparatus 800 includes a selecting unit 804 that is configured to select a target resource from the available resource set.

Optionally, the initial information includes at least one of the following information:
an available RB set;
an unavailable RB set;
an RB set with consistent LBT failures;
time information corresponding to an RB set with consistent LBT failures;
a quantity of RB sets occupied by transmission of a PSCCH and/or a PSSCH in one time unit;
an RB set occupied by transmission of a PSCCH and/or a PSSCH in one time unit;
a quantity of sub-channels occupied by transmission of a PSCCH and/or a PSSCH in one time unit;
a quantity of sub-channels occupied by transmission of a PSCCH and/or a PSSCH in one RB set in one time unit; or
a starting PRB of a resource pool.

Optionally, the available RB set meets at least one of the following conditions:
the available RB set is an RB set continuous in frequency domain;
the available RB set does not include an RB set with consistent LBT failures; or
a quantity of RB sets in any combination of consecutive RB sets in the available RB set is greater than or equal to a quantity of RB sets occupied by transmission of a PSSCH and/or a PSCCH.

Optionally, the RB set occupied by the transmission of the PSCCH and/or the PSSCH in the one time unit meets at least one of the following conditions:
the RB set occupied by the transmission of the PSCCH and/or the PSSCH in the one time unit is an RB set continuous in frequency domain; or
the RB set occupied by the transmission of the PSCCH and/or the PSSCH in the one time unit does not include an RB set with consistent LBT failures.

Optionally, a resource in the candidate resource set needs to meet at least one of the following conditions:
being within one time unit in time domain; or
including a first quantity of RB sets in frequency domain, and occupying a second quantity of sub-channels in each RB set.

Optionally, the first quantity and/or the second quantity need to meet at least one of the following conditions:
a product of the first quantity and the second quantity is equal to a quantity of sub-channels occupied by transmission of a PSCCH or a PSSCH;
the second quantity of sub-channels are consecutive sub-channels;
indexes of a second quantity of sub-channels occupied in different RB sets in the first quantity of RB sets are the same;
the first quantity of RB sets are consecutive RB sets;
the first quantity of RB sets do not include any unavailable RB set in the initial information;
the first quantity of RB sets do not include any RB set with consistent LBT failures in the initial information;
the first quantity is equal to a quantity of RB sets occupied by transmission of a PSCCH and/or a PSSCH in one time unit in the initial information; or
the first quantity of RB sets are RB sets occupied by transmission of a PSCCH and/or a PSSCH in one time unit in the initial information.

Optionally, the determining unit 802 is specifically configured to:
determine the candidate resource set based on at least one of the initial information, a target time, or a target frequency domain, where a resource in the candidate resource set belongs to the target time in time domain and belongs to the target frequency domain in frequency domain.

Optionally, the target frequency domain meets at least one of the following conditions:
the target frequency domain is an RB set occupied by transmission of a PSCCH and/or a PSSCH in one time unit in the initial information;
the target frequency domain is a third quantity of consecutive RB sets in a resource pool, where the third quantity is greater than or equal to a quantity of RB sets occupied by transmission of a PSCCH and/or a PSSCH; or
the target frequency domain is all RB sets of a target type in a resource pool, where the RB sets of the target type include a fourth quantity of consecutive RB sets, and the fourth quantity is greater than or equal to a quantity of RB sets occupied by transmission of a PSCCH and/or a PSSCH.

Optionally, a resource in the target frequency domain does not include an RB set in at least one of the following cases:
an RB set with consistent LBT failures in the initial information;
a fifth quantity of consecutive RB sets, where the fifth quantity is less than a quantity of RB sets occupied by transmission of a PSCCH and/or a PSSCH; or
an independent RB set, where the independent RB set does not constitute consecutive RB sets with any other RB set in the resource pool.

Optionally, the obtaining unit 803 is specifically configured to:
exclude a candidate resource of a target type from the candidate resource set, to obtain the available resource set, where the candidate resource of the target type is associated with a target RB set.

Optionally, the target RB set meets at least one of the following conditions:
the target RB set is an RB set with consistent LBT failures in the initial information;
the target RB set is an unavailable RB set in the initial information;
the target RB set is a sixth quantity of consecutive RB sets, where the sixth quantity is less than a quantity of RB sets occupied by transmission of a PSCCH and/or a PSSCH; or
the target RB set is an independent RB set, where the independent RB set does not constitute consecutive RB sets with any other RB set in the resource pool.

Optionally, a ratio of a quantity of resources in the available resource set to a quantity of resources in a first resource set is greater than or equal to a first threshold, and the first resource set is any one of the following:
the first resource set includes all candidate resources in a resource selection window; or
the first resource set includes all candidate resources in a resource selection window other than a candidate resource of a target type.

Optionally, the apparatus 800 further includes:
a calculating unit, configured to obtain a CBR, where the CBR is a ratio of a quantity of sub-channels whose RSSIs exceed a second threshold to a quantity of all sub-channels in a target measurement window.

Optionally, a definition of the RSSI includes any one of the following:
the RSSI is a linear average value of all received power values on orthogonal frequency division multiplexing OFDM symbols that are configured for a PSCCH and a PSSCH in one slot except a starting symbol; or
the RSSI is a maximum value of at least two values of a first value, a second value, and a third value, where the first value is a linear average value of received power values on all symbols between a first starting symbol and a second starting symbol in OFDM symbols configured for a PSCCH and a PSSCH in one slot; the second value is a linear average value of received power values on all symbols after the second starting symbol in the OFDM symbols configured for the PSCCH and the PSSCH in the one slot; and the third value is a linear average value of received power values on all symbols except the first starting symbol and the second starting symbol in the OFDM symbols configured for the PSCCH and the PSSCH in the one slot.

Optionally, a frequency domain range of the target measurement window includes at least one of the following:
a frequency domain range of a resource pool;
an RB set except an unavailable RB set in the initial information in a resource pool; or
an RB set except an RB set with consistent LBT failures in the initial information in a resource pool.

It should be noted that for details on a specific implementation of the apparatus 800 and a technical effect achieved by the apparatus 800, reference may be made to related descriptions in the method shown in FIG. 2.

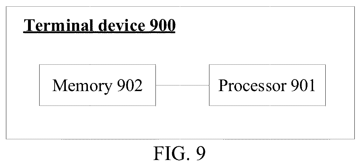

In addition, an embodiment of the present application further provides a terminal device 900. As shown in FIG. 9, the terminal device 900 includes a processor 901 and a memory 902.

The memory 902 is configured to store a program, and
the processor 901 is configured to execute the method provided in FIG. 2 according to the program.

In addition, an embodiment of the present application further provides a storage medium, where the storage medium is used to store a program, and the program runs on a processor to execute the method provided in embodiments of the present application.

The terms "first", "second" and the like in this specification and claims of the present application are used to distinguish between similar objects, rather than to describe a particular order or a sequential order. It should be understood that the data used in this way may be interchangeable under appropriate circumstances such that embodiments in the present application are capable of being implemented in an order different from that illustrated or described herein. In addition, in the specification and the claims, "and/or" represents at least one of the associated objects, and the character "/" generally indicates an "or" relationship between the associated objects.

It can be learned from the description of the foregoing implementations that a person skilled in the art may clearly understand that all or some of steps in a method in the foregoing embodiments may be implemented by software in addition to a universal hardware platform. Based on such an understanding, the technical solutions of the present application may be implemented in a form of a software product. The computer software product may be stored in a storage medium, such as a read-only memory (read-only memory, ROM) or a random access memory (Random Access Memory, RAM), a magnetic disk, or an optical disc, and includes several instructions for instructing a computer device (which may be a personal computer, a server, or a network communications device such as a router) to execute a method described in embodiments of the present application or some parts of the embodiments.

The embodiments in this specification are described in a progressive manner, the same or similar parts between the embodiments may refer to each other, and each embodiment focuses on differences from other embodiments. In particular, system embodiments and device embodiments are basically similar to method embodiments, and therefore are described simply. For details on related parts, reference may be made to some descriptions of the method embodiments. The device and system embodiments described above are merely exemplary. The modules described as separate parts may or may not be physically separate, and parts displayed as modules may or may not be physical modules, and may be located in one place, or may be distributed on a plurality of network elements. Some or all of the modules may be selected according to an actual requirement to achieve the objectives of the solutions in the embodiments. A person of ordinary skill in the art may understand and implement the solutions without creative efforts.

The foregoing descriptions are merely optional implementations of the present application, and are not intended to limit the protection scope of the present application. It should only be noted that those of ordinary skill in the art may further make various improvements and modifications without departing from the present application, and these improvements and modifications also fall within the protection scope of the present application.

## Claims

1. A resource determination method for sidelink operation on unlicensed spectrum, applied to a first terminal device, wherein the method comprises:
acquiring initial information;
determining a candidate resource set based on the initial information; and
performing resource exclusion on the candidate resource set to obtain an available resource set.

2. The method according to claim 1, wherein the initial information comprises at least one of following information:
an available resource block set RB set;
an unavailable RB set;
an RB set with consistent listen before talk LBT failures;
time information corresponding to an RB set with consistent LBT failures;
a quantity of RB sets occupied by transmission of a physical sidelink control channel PSCCH and/or a physical sidelink shared channel PSSCH in one time unit;
an RB set occupied by transmission of a PSCCH and/or a PSSCH in one time unit;
a quantity of sub-channels occupied by transmission of a PSCCH and/or a PSSCH in one time unit;
a quantity of sub-channels occupied by transmission of a PSCCH and/or a PSSCH in one RB set in one time unit; or
a starting physical resource block PRB of a resource pool.

3. The method according to claim 2, wherein the available RB set meets at least one of following conditions:
the available RB set is an RB set continuous in frequency domain;
the available RB set does not comprise an RB set with consistent LBT failures; or
a quantity of RB sets in any combination of consecutive RB sets in the available RB set is greater than or equal to a quantity of RB sets occupied by transmission of a PSSCH and/or a PSCCH.

4. The method according to claim 2, wherein the RB set occupied by the transmission of the PSCCH and/or the PSSCH in the one time unit meets at least one of following conditions:
the RB set occupied by the transmission of the PSCCH and/or the PSSCH in the one time unit is an RB set continuous in frequency domain; or
the RB set occupied by the transmission of the PSCCH and/or the PSSCH in the one time unit does not comprise an RB set with consistent LBT failures.

5. The method according to any one of claims 1 to 4, wherein a resource in the candidate resource set meets at least one of following conditions:
being within one time unit in time domain; or
being within a first quantity of RB sets in frequency domain, and occupying a second quantity of sub-channels in each of the RB sets.

6. The method according to claim 5, wherein the first quantity and/or the second quantity meets at least one of following conditions:
a product of the first quantity and the second quantity is equal to a quantity of sub-channels occupied by transmission of a PSCCH and/or a PSSCH;
the second quantity of sub-channels are consecutive sub-channels;
indexes of the second quantity of sub-channels occupied in different RB sets in the first quantity of RB sets are the same;
the first quantity of RB sets are consecutive RB sets;
the first quantity of RB sets do not comprise any unavailable RB set in the initial information;
the first quantity of RB sets do not comprise any RB set with consistent LBT failures in the initial information;
the first quantity is equal to a quantity of RB sets occupied by transmission of a PSCCH and/or a PSSCH in one time unit in the initial information; or
the first quantity of RB sets are RB sets occupied by transmission of a PSCCH and/or a PSSCH in one time unit in the initial information.

7. The method according to any one of claims 1 to 4, wherein the determining the candidate resource set based on the initial information comprises:
determining the candidate resource set based on at least one of the initial information, a target time, or a target frequency domain, wherein a resource in the candidate resource set belongs to the target time in time domain and belongs to the target frequency domain in frequency domain.

8. The method according to claim 7, wherein the target frequency domain meets at least one of following conditions:
the target frequency domain is an RB set occupied by transmission of a PSCCH and/or a PSSCH in one time unit in the initial information;
the target frequency domain is a third quantity of consecutive RB sets in a resource pool, wherein the third quantity is greater than or equal to a quantity of RB sets occupied by transmission of a PSCCH and/or a PSSCH; or
the target frequency domain is all RB sets of a target type in a resource pool, wherein the RB sets of the target type comprise a fourth quantity of consecutive RB sets, and the fourth quantity is greater than or equal to a quantity of RB sets occupied by transmission of a PSCCH and/or a PSSCH.

9. The method according to claim 7 or 8, wherein a resource in the target frequency domain does not comprise an RB set in at least one of following cases:
an RB set with consistent LBT failures in the initial information;
a fifth quantity of consecutive RB sets, wherein the fifth quantity is less than a quantity of RB sets occupied by transmission of a PSCCH and/or a PSSCH; or
an independent RB set, wherein the independent RB set does not constitute consecutive RB sets with any other RB set in the resource pool.

10. The method according to any one of claims 1 to 4, wherein the performing resource exclusion on the candidate resource set to obtain the available resource set comprises:
excluding a candidate resource of a target type from the candidate resource set, to obtain the available resource set, wherein the candidate resource of the target type is associated with a target RB set.

11. The method according to claim 10, wherein the target RB set meets at least one of following conditions:
the target RB set is an RB set with consistent LBT failures in the initial information;
the target RB set is an unavailable RB set in the initial information;
the target RB set is a sixth quantity of consecutive RB sets, wherein the sixth quantity is less than a quantity of RB sets occupied by transmission of a PSCCH and/or a PSSCH; or
the target RB set is an independent RB set, wherein the independent RB set does not constitute consecutive RB sets with any other RB set in the resource pool.

12. The method according to any one of claims 1 to 11, wherein a ratio of a quantity of resources in the available resource set to a quantity of resources in a first resource set is greater than or equal to a first threshold, and the first resource set comprises any one of following:
the first resource set comprises all candidate resources in a resource selection window; or
the first resource set comprises all candidate resources in a resource selection window other than a candidate resource of a target type.

13. The method according to any one of claims 1 to 12, wherein the method further comprises:
obtaining a channel busy ratio CBR, wherein the CBR is a ratio of a quantity of sub-channels whose received signal strength indicators RSSI exceed a second threshold to a quantity of all sub-channels in a target measurement window.

14. The method according to claim 13, wherein a definition of the RSSI comprises any one of following:
the RSSI is a linear average value of all received power values on orthogonal frequency division multiplexing OFDM symbols that are configured for a PSCCH and a PSSCH in one slot other than a starting symbol; or
the RSSI is a maximum value of at least two values of a first value, a second value, and a third value, wherein the first value is a linear average value of received power values on all symbols between a first starting symbol and a second starting symbol in OFDM symbols configured for a PSCCH and a PSSCH in one slot; the second value is a linear average value of received power values on all symbols after the second starting symbol in the OFDM symbols configured for the PSCCH and the PSSCH in the one slot; and the third value is a linear average value of received power values on all symbols except the first starting symbol and the second starting symbol in the OFDM symbols configured for the PSCCH and the PSSCH in the one slot.

15. The method according to claim 13 or 14, wherein a frequency domain range of the target measurement window comprises at least one of following:
a frequency domain range of a resource pool;
an RB set except an unavailable RB set in the initial information in a resource pool; or
an RB set except an RB set with consistent LBT failures in the initial information in a resource pool.

16. A resource determination apparatus for sidelink operation on unlicensed spectrum, applied to a first terminal device, wherein the apparatus comprises:
an acquiring unit, configured to acquire initial information;
a determining unit, configured to determine a candidate resource set based on the initial information; and
an obtaining unit, configured to perform resource exclusion on the candidate resource set to obtain an available resource set.

17. A terminal device, wherein the terminal device comprises a processor and a memory, wherein
the memory is configured to store a program; and
the processor is configured to execute the method according to any one of claims 1 to 15 according to the program.

18. A storage medium, wherein the storage medium is configured to store a program, and the program runs on a processor to execute the method according to any one of claims 1 to 15.
